**Europäisches Patentamt**

**European Patent Office**

**Office européen des brevets**

(19)

(11) Veröffentlichungsnummer : **0 332 683 B1**

# (12) EUROPÄISCHE PATENTSCHRIFT

(45) Veröffentlichungstag der Patentschrift :
**24.06.92 Patentblatt 92/26**

(51) Int. Cl.⁵ : **A62D 3/00, B09B 3/00**

(21) Anmeldenummer : **88908185.7**

(22) Anmeldetag : **02.09.88**

(86) Internationale Anmeldenummer :
**PCT/EP88/00797**

(87) Internationale Veröffentlichungsnummer :
**WO 89/02294 23.03.89 Gazette 89/07**

(54) **VERFAHREN ZUR ENTSORGUNG VON SALZHALTIGEN STÄUBEN.**

(30) Priorität : **08.09.87 DE 3730056**
**15.10.87 DE 3734879**

(43) Veröffentlichungstag der Anmeldung :
**20.09.89 Patentblatt 89/38**

(45) Bekanntmachung des Hinweises auf die
Patenterteilung :
**24.06.92 Patentblatt 92/26**

(84) Benannte Vertragsstaaten :
**AT BE CH DE FR GB IT LI NL SE**

(56) Entgegenhaltungen :
**EP-A- 0 135 147**
**EP-A- 0 226 880**
**CH-A- 640 419**
**DE-C- 2 925 882**
**JP-A-60 139 381**
**US-A- 4 124 405**
**Patents Abstracts of Japan, Vol.9, no. 301**
**(C-316) & JP, A, 60-139381 ( TOUHOKU DEN-**
**RIYOKU K.K.) 24 Juli 1985**

(73) Patentinhaber : **INCA Baustofftechnik GmbH**
**Waffenschmidtstrasse 4**
**W-5000 Köln 71 (DE)**

(72) Erfinder : **ROESKY, Werner**
**St. Anno Höhe 27**
**W-5063 Overath (DE)**
Erfinder : **DEFFNER, Dieter**
**Herweg 38b**
**W-5060 Bergisch Gladbach 1 (DE)**
Erfinder : **WOLTER, Manfred**
**Edelrather Weg 141**
**W-5090 Leverkusen 1 (DE)**

(74) Vertreter : **Freischem, Werner, Dipl.-Ing.**
**An Gross St. Martin 2**
**W-5000 Köln 1 (DE)**

EP 0 332 683 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Entsorgung von salzhaltigen Stäuben aus Abfallverbrennungsanlagen.

Bei der Reinigung von Rauchgasen aus Abfallverbrennungsanlagen müssen sowohl gasförmige als auch feste Schadstoffe abgeschieden werden.

Bei den gasförmigen Schadstoffen handelt es sich im wesentlichen um Chlorwasserstoff, Schwefeldioxid und Fluorwasserstoff und bei den festen Schadstoffen um Flugaschen mit Beimengungen von toxischen Metallsalzen, z.B. die Salze des Bleis, Cadmiums, Chroms, Quecksilbers, Zinns, Zinks bzw. ihre Oxide oder Hydroxide.

Für die Reinigung der Rauchgase aus Abfallverbrennungsanlagen werden unterschiedliche Verfahren angewandt. Bei diesen Verfahren wird die Reinigung in mindestens zwei Verfahrensstufen durchgeführt, in der einen Stufe werden die gasförmigen Schadstoffe und in einer weiteren Stufe die festen Schadstoffe abgeschieden. Zur Abscheidung der gasförmigen und festen Schadstoffe werden sowohl Naß- als auch Trockenabscheider verwendet.

Naßabscheider weisen im allgemeinen eine sehr hohe Abscheideleistung auf. Ihr verfahrenstechnisch bedingter Nachteil ist jedoch, daß die Schadstoffe zwar aus der Luft abgeschieden werden, aber danach in das Wasser gelangen. In einer weiteren Stufe ist es also erforderlich, die mit Schadstoffen belasteten Abwässer aufzubereiten, wodurch diese Verfahren sehr teuer werden. Als weiterer Nachteil ergibt sich, daß Schlämme aus der nassen Abscheidung sich schwieriger und damit kostenungünstiger sammeln, behandeln, transportieren und einlagern lassen als Stäube aus der trockenen Abscheidung.

Diese Probleme bei der nassen Rauchgasreinigung führten in den letzten Jahren zu einer lebhaften Entwicklung auf dem Gebiet der trockenen Rauchgasreinigung.

Zur trockenen Abscheidung von gasförmigen Schadstoffen wird in einem Reaktor Kalkhydrat eingeblasen. Die Schadgase werden durch Sorption an der Oberfläche der Kalkpartikel gebunden. Bei den Quasitrockenverfahren wird eine Kalkhydratsuspension in den Reaktor eingedüst, wobei der Wasseranteil in der Suspension so eingestellt werden muß, daß das Wasser komplett verdampfen kann. Die Reaktionsprodukte werden in der nachgeschalteten Filteranlage gemeinsam mit den Stäuben ausgeschieden.

Bei der Neutralisation der sauren Schadgase durch Kalkprodukte bestehen die Reaktionsprodukte im wesentlichen aus den Salzen Calciumchlorid ($CaCl_2$), Calciumsulfat als Dihydrat ($CaSO_4 \bullet 2\,H_2O$), Calciumfluorid ($CaF_2$).

Bei der Ablagerung dieser salzhaltigen Stäube ist dafür zu sorgen, daß nur sehr geringe Salzmengen und Mengen an toxischen Metallverbindungen in das Grundwasser gelangen, und zwar nur in Konzentrationen in der Größenordnung des natürlichen Grundwassers. Diese Grenzwerte sind von den Behörden festgelegt.

Für die Ablagerung und Behandlung der salzhaltigen Stäube aus Abfallverbrennungsanlagen sind folgende Techniken bekannt:

Die salzhaltigen Stäube werden in dichtverschließbaren Behältern abgefüllt und in eine Untertagedeponie oder Übertagedeponie abgelagert. Die Ablagerung in eine geeignete Untertagedeponie ist zwar sehr sicher, da die Schadstoffe nicht mehr in den Wasserkreislauf gelangen können, andererseits ist dieses Verfahren sehr kostenaufwendig, weil sowohl die Behälter als auch der Deponieraum als auch das Einbringen in die Untertagedeponie Kosten verursachen. Ferner ist der Raum an sicheren Untertagedeponien begrenzt und zur Lagerung für weit gefährlichere Stoffe, insbesondere radioaktive und hochtoxische Stoffe, vorbehalten.

Die Ablagerung von mit Staub gefüllten Behältern in Übertagedeponien bietet keine Gewähr für eine sichere Ablagerung, da einerseits eine Beschädigung der Behälter nicht auszuschließen ist und andererseits ein vollkommener Wasserabschluß einer Übertagedeponie nicht realisierbar ist.

In der DD-PS 149 136 ist ein Verfahren zur Endlagerung für eine Vielzahl von Abfällen beschrieben, die überwiegend mineralischen Ursprungs sind, meist geringe Wasserlöslichkeit besitzen und auch fast durchweg zementverträgliche Stoffe enthalten. Diese Abfälle werden mit durch chemische Umsetzung erhärtenden oder thermoplastischen geschmolzenen Bindemittel, wie Zement, Kalk, Gips oder Bitumen, gemischt und in den Deponieraum eingebracht.

In der US-PS 32 74 784 ist ein Verfahren zur Verfestigung von radioaktiven Abfällen beschrieben, bei dem Maßnahmen getroffen sind, die einen Wasserzutritt zum Konditionierungsprodukt und damit auch eine Auslaugung verhindern sollen. Bei diesem Verfahren wird eine fließfähige Mischung aus radioaktivem Abfall, Zement und Wasser in ein Bohrloch oder in unterirdische Hohlräume injiziert. Das Bohrloch bzw. der unterirdische Hohlraum wird gegebenenfalls vor dem Einbringen der Abfallstoffe mit einem Dichtmittel, insbesondere Zementschlämme, abgedichtet. Nach dem Einbringen des sich verfestigenden Abfalls werden die verfüllten Hohlräume mit einem abfallfreien Dichtmittel, meist Zementschlamm, verschlossen.

Um die salzhaltigen Stäube bei der Ablagerung in Deponien soweit wie möglich zu immobilisieren, ist es

2

aus der DE-PS 35 45 592 bekannt, durch Versetzen mit Zement, Wasser, Zuschlägen, wie Flugasche und gegebenenfalls Zusatzstoffen, wie Natriumsulfid, einen Abfallkörper mit sonderabfallfreien Randschichten dadurch herzustellen, daß mit Hilfe eines beweglichen Gerätes ein schichtweiser Aufbau der Abfallkörper in einem Arbeitsgang erfolgt, indem zunächst als Bodenschicht ein sonderabfallfreies Zement-/Wassergemisch mit einem Wasser-/Zementwert von 0,2 bis 0,8 vorgelegt wird, dann zum Aufbau des Abfallkörpers von außen nach innen und von unten nach oben diesem Zement-/Wassergemisch der zu deponierende Sonderabfall mit steigender Konzentration von 0 bis 70 Gew.-% zugemischt wird, wobei gleichzeitig durch Wasserzugabe der Wasser-/Zementwert bis auf 1,2 gesteigert wird, und abschließend in Richtung auf die Deckschicht und die seitlichen Randzonen der Sonderabfallgehalt nach und nach wieder auf 0 Gew.-% und die Reduzierung der Wasserzugabe der Wasser-/Zementwert auf den zuvor eingestellten Wert zwischen 0,2 bis 0,8 zurückgehommen wird.

Schließlich ist aus der DE-PS 33 47 376 ein Verfahren zur Deponierung eines Gemisches aus Kohlekraftwerk-Reststoffen und Reststoffen einer Entschwefelungsanlage bekannt, bei dem das Gemisch unter Zusatz von mindestens 3 Gew.-% Calciumhydroxid bezogen auf die Menge der trockenen Reststoffe zu einem erdfeuchten Produkt vermischt, in die Deponie verbracht und dort verdichtet wird.

Alle bislang entwickelten Verfahren haben den Nachteil, daß einerseits zur Verfestigung hochwertige Wirtschaftsgüter, wie Bitumen und Zement eingesetzt werden müssen, und zwar in erheblichen Gewichtsanteilen, andererseits die von den Behörden festgelegten Grenzwerte teilweise nicht erreicht werden. Als ein Nachteil bei der Verfestigung während des Einbaus ist anzusehen, daß festgestellte Mängel nicht direkt, sondern nur indirekt durch die Aufbereitung des Sickerwassers behoben werden können.

Der Erfindung liegt die Aufgabe zugrunde, ein Verfahren zur Entsorgung von salzhaltigen Stäuben zu schaffen, bei dem fabrikmäßig und qualitätsüberprüfbar Produkte aus salzhaltigen Stäuben erzeugt werden, die den zuverlässigen Werten der Deponieklasse 2 entsprechen und damit die Voraussetzung schaffen, die Verfestigungsprodukte auch als Baumaterial im Erdbau einzusetzen.

Das Verfahren nach der Erfindung ist dadurch gekennzeichnet, daß die salzhaltigen Stäube mit anderen Abfallstoffen, wie z.B. Aschen und Flugstäuben aus mit Steinkohle oder Braunkohle befeuerten Wärmeerzeugungsanlagen, Abfallstoffen der Gießereien, Abfallstoffen der Calciumcarbidherstellung, unter Zusatz von Wasser intensiv gemischt werden, wobei diese Mischung mindestens 8 % hydrothermal umsetzbares Calciumoxid bzw. äquivalente Mengen anderer hydrothermalumsetzbarer Calciumverbindungen enthält unter der Wasserzusatz so bemessen ist, daß eine optimale Verdichtung

möglich ist und die Mischung danach unter Verdichtung zu standfesten Formlingen verarbeitet wird und die Formlinge anschließend in einem Autoklav bei einem Sattdampfdruck von mindestens 1 bar gehärtet werden.

Das erfindungsgemäße Verfahren ist in den folgenden Beispielen näher erläutert.

Beispiel 1

In einem Mischer werden 65 Gewichtsteile eines salzhaltigen Staubes aus einer Schlammverbrennungsanlage mit 35 Gewichtsteilen Braunkohlenflugasche unter Zusatz von 1 Gewichtsteil Wasser auf 10 Gewichtsteile Feststoff intensiv gemischt. Die chemische Zusammensetzung der Stoffe ist in der folgenden Tabelle aufgeführt:

|  | Salzhaltiger Staub aus Schlammverbrennung in Gewichts-% | Braunkohlen flugasche in Gewichts-% |
|---|---|---|
| $SiO_2$ | 3,9 | 4,8 |
| $Fe_2O_3$ | 26,9 | 35,3 |
| $Al_2O_3$ | 1,3 | 4,4 |
| $Mn_2O_3$ | 0,3 | - |
| $CaO$ | 35,5 | 30,5 |
| $MgO$ | 1,0 | 14,4 |
| $K_2O$ | 0,0 | - |
| $Na_2O$ | - | 0,5 |
| $Cl$ | 6,5 | - |
| $SO_3$ | 6,8 | 4,2 |
| $GV$ | 15,6 | 1,8 |

Die Mischung wird auf einer hydraulischen Presse zu Formlingen mit den Abmessungen 250 x 125 x 60 mm mit einem spezifischen Preßdruck von 250 bar verpreßt.

Anschließend werden die Formlinge in einem Autoklaven vier Stunden bei einem Sattdampfüberdruck von 16 bar gehärtet. Die Aufheiz- und Abkühldauer beträgt jeweils 1 Stunde.

Die Eluatwerte dieser Verfestigungsprodukte wurden in Anlehnung an DIN 38 414 Teil 4 ermittelt. In der folgenden Tabelle sind in

Spalte I die zulässigen Eluatwerte der Trinkwasserverordnung 1986,

Spalte II die zulässigen Eluatwerte der Deponieklasse 2,

Spalte III die Eluatwerte der verarbeiteten Stäube und

Spalte IV die Eluatwerte der nach Beispiel 1 hergestellten Produkte eingetragen:

| | I<br>Trinkwasser-<br>verordnung 1986 | II<br>Deponieklas-<br>se 2<br>1987 | III<br>salzhalti-<br>ger Staub | IV<br>Verfesti-<br>gungspro-<br>dukt |
|---|---|---|---|---|
| ph | 6,5-9,5 | 5,5-12,0 | 12,4 | 9,6 |
| el. Leit-<br>fähigkeit | | | | |
| mS/m | 200 | 300 | 2800 | 160 |
| Cl mg/l | 200 | (x) | 5900 | 270 |
| $SO_4$ mg/l | 250 | (x) | 2600 | 72 |
| Pb mg/l | 0,04 | 0,5 | 10,8 | 0,02 |
| Ba mg/l | - | 1 | 1,5 | 0,2 |

Druckfestigkeit $\qquad$ 10 N/mm$^2$

(x) wird durch Leitfähigkeit begrenzt.

Beispiel 2:

Unter sonst gleichen Versuchsbedingungen wie im Beispiel 1 wurden 50 Gewichtsteile eines salzhaltigen Staubes aus einer Müllverbrennungsanlage mit 50 Gewichtsteilen eines gebrauchten Quarzsandes aus einer Gießerei, davon 30 %, d.h. 15 Gewichtsteile gemahlen unter Zusatz von 0,6 Gewichtsteilen Wasser auf 10 Gewichtsteile Feststoff miteinander vermischt.

Die chemische Zusammensetzung der Stoffe nennt die folgende Tabelle:

| | Salzhaltiger Staub aus Müllverbrennung Gew.-% | gebrauchter Quarz- sand aus Gießerei davon 30% gemahlen |
|---|---|---|
| $SiO_2$ | 28,9 | 95 |
| $Fe_2O_3$ | 3,1 | 1 |
| $Al_2O_3$ | 10,9 | 1 |
| $Mn_2O_3$ | 0,2 | |
| $CaO$ | 31,0 | |
| $MgO$ | 1,9 | |
| $K_2O$ ) $Na_2O$ ) | 1,7 | |
| $Cl$ | 9,5 | |
| $SO_3$ | 1,4 | |
| $GV$ | 11,2 | 2,2 |

mittlerer Korndurchmesser 15µm

400µm

gemahlen: 55 µm

In der folgenden Tabelle sind die Eluatwerte des salzhaltigen Staubes und die des hydrothermal behandelten Verfestigungsproduktes aufgeführt:

| | salzhaltiger Staub | Verfestigungsprodukt |
|---|---|---|
| ph | 12,2 | 8,0 |
| Leitfähig- keit mS/m | 3.300 | 120 |
| $Cl$ mg/l | 9.300 | 253 |
| $SO_4$ mg/l | 1.680 | 35 |
| $Pb$ mg/l | 4,5 | 0,005 |
| $Ba$ mg/l | 1,7 | 0,07 |
| Druckfestigkeit | | 11 $N/mm^2$ |

Beispiel 3

Anstelle von gemahlenem Quarzsand aus der Gießerei wie im Beispiel 2 wurden der Mischung 15 Gew.-% Staub aus einer mit Steinkohle befeuerten zirkulierenden Wirbelschichtfeuerungsanlage,bzw. 15 Gew.-% eines Flugstaubes aus einer mit Braunkohle befeuertenWärmeerzeugungsanlage zugesetzt.

Am hydrothermal gehärteten Verfestigungsprodukt wurden ähnlich niedrige Eluatwerte gefunden wie in den Beispielen 1 bis 2.

Die chemische Zusammensetzung der Stäube nennt die folgende Tabelle:

| | Staub aus Zirkulierender Wirbelschichtfeuerung Gewichts-% | Braunkohlenflugasche Gewichts-% |
|---|---|---|
| $SiO_2$ | 44,5 | 8,8 |
| $Fe_2O_3$ | 11,3 | 12,9 |
| $Al_2O_3$ | 27,2 | 2,0 |
| $Mn_2O_3$ | - | - |
| $CaO$ | 4,0 | 53,0 |
| $MgO$ | 2,3 | 11,6 |
| $K_2O$ | 3,2 | 0,1 |
| $Na_2O$ | 1,1 | 0,4 |
| $Cl$ | - | - |
| $SO_3$ | 3,4 | 10,2 |
| GV | 2,3 | 0,8 |
| mittlerer Korndurchmesser | 12μm | 18 μm |

Die in den Stäuben enthaltenen Anteile an Calciumoxid und kieselsaurehaltigen Stoffe bilden beim Härten im Autoklav Calciumsilikathydrate, welche dem gehärteten Produkt eine gute Festigkeit geben, während andere Anteile der Stäube und Abfallstoffe den Porenraum reduzierende und abdichtende Bestandteile, wie Calciumaluminathydraht-, Calciumferrithydratverbindungen bilden und leichter lösliche Metallverbindungen in schwerer lösliche umgewandelt werden.

Die Stäube und Abfallstoffe werden mit geringem Energieaufwand zu stabilen Produkten geformt, die gut zu handhaben und kompakt stapelbar sind. Die Festigkeit dieser Produkte ist derart, daß diese auch als Baumaterial, insbesondere im Erdbau, einsetzbar sind.

Die Mischung aus salzhaltigen Stäuben, Asche, Quarzsande enthaltenden Abfallstoffen und Wasser wird zu standfesten Formlingen verdichtet. Das Volumenverhältnis von losem Schüttgut der zu verdichtenden Mischung zum verdichteten Formling beträgt etwa 2 : 1. Das Verdichten kann mittels Brikettierwalzen oder Brikettierpressen, hydraulischer Pressen, Schlagpressen, Exzenterpressen oder dergleichen oder auch mit Hilfe von Vibratoren erfolgen, wobei der spezifische Preßdruck mindestens 100 bar betragen sollte. Die Formlinge werden dann in einem Autoklav gehärtet. Zur Erzielung einer hohen Festigkeit sollte die zu verpressende Mischung mindestens 20 Gew.-% Calciumoxid und mindestens 30 Gew.-% quarzhaltige bzw. kieselsäurehaltige Stoffe enthalten. Zur Erzielung einer hohen Festigkeit sollten mindestens 40 % dieser quarzhaltigen bzw. kieselsäurehaltigen Stoffe in Form von Staub oder Mehl enthalten sein.

Damit die grünen Formlinge im Autoklav und die ausgehärteten Formlinge auf einer Deponie kompakt stapelbar sind, wird die Mischung zweckmäßigerweise zu 1 bis 10 kg schweren quaderförmigen oder kubischen Formlingen verarbeitet.

Da häufig auch kieselsäurehaltige Natursande nahezu kostenlos zur Verfügung stehen, kann es zur Erzielung einer guten Festigkeit der hydrothermal gehärteten Formlinge zweckmäßig sein, bis zu 40 % kieselsäurehaltige Natursande beizumischen.

In den Beispielen wurde ein spezifischer Preßdruck von 250 bar und ein Sattdampfdruck im Autoklav von 16 bar angegeben. Zur Erzielung guter Ergebnisse sollte der spezifische Preßdruck im Bereich von 200 - 400 bar und der Sattdampfdruck im Autoklav über 15 bar liegen.

**Patentansprüche**

1. Verfahren zur Entsorgung von salzhaltigen Stäuben aus Abfallverbrennungsanlagen, dadurch gekennzeichnet, daß die salzhaltigen Stäube mit anderen Abfallstoffen, wie Aschen und Flugstäube aus mit Steinkohle oder Braunkohle befeuerten Wärmeerzeugungsanlagen, kieselsäurehaltige Sande, insbesondere Quarzsande enthaltende Abfallstoffe der Gießereien oder aus Bauschutt, Abfallstoffe der Calciumcarbidherstellung, unter Zusatz von Wasser intensiv gemischt werden, wobei die Mischung mindestens 8 % hydrothermal umsetzbares Calciumoxid bzw. äquivalente Mengen anderer hydrothermalumsetzbarer Calciumverbindungen enthält und der Wasserzusatz so bemessen ist, daß eine optimale Verdichtung möglich ist und die Mischung danach unter Verdichtung zu standfesten Formlingen verarbeitet wird und die Formlinge anschließend in einem Autoklav bei einem Sattdampfdruck von mindestens 1 bar gehärtet werden.

2. Verfahren nach Anspruch 1, dadurch gekennzeichnet, daß die Mischung bei der Verarbeitung zu Formlingen um ca. 50 % des Mischungsvolumens verdichtet wird.

3. Verfahren nach Anspruch 1 oder 2, dadurch gekennzeichnet, daß die Mischung unter einem spezifischen Preßdruck von mindestens 100 bar zu Formlingen verpreßt werden.

4. Verfahren nach einem der Ansprüche 1 bis 3, dadurch gekennzeichnet, daß das Verdichten der Mischung mittels Brikettierpressen oder Brikettierwalzen erfolgt.

5. Verfahren nach einem der Ansprüche 1 bis 4, dadurch gekennzeichnet, daß die Verdichtung der Mischung zu Formlingen mit Hilfe von Vibratoren erfolgt.

6. Verfahren nach Anspruch 1, dadurch gekennzeichnet, daß die Mischung zu 1 bis 10 kg schweren quaderförmigen Formlingen verarbeitet wird.

7. Verfahren nach Anspruch 6, dadurch gekennzeichnet, daß die Mischung zu kubischen Formlingen verarbeitet wird.

8. Verfahren nach einem der Ansprüche 1 bis 7, dadurch gekennzeichnet, daß die Mischung mindestens 20 Gew.-% Calciumoxid und mindestens 30 Gew.-% quarzhaltige bzw. kieselsäurehaltige Stoffe enthält.

9. Verfahren nach Anspruch 8, dadurch gekennzeichnet, daß mindestens 40 % dieser quarzhaltigen bzw. kieselsäurehaltigen Stoffe in Form von Staub oder Mehl enthalten sind.

10. Verfahren nach einem der Ansprüche 1 bis 9, dadurch gekennzeichnet, daß der spezifische Preßdruck im Bereich von 200 bis 400 bar liegt und der Sattdampfdruck im Autoklav über 15 bar liegt.

11. Verfahren nach einem der Ansprüche 1 bis 10, dadurch gekennzeichnet, daß der Mischung aus Abfallstoffen kieselsäurehaltige Natursande beigemischt wird.

**Claims**

1. A process for the disposal of salt-bearing dusts from waste incinerating plants, characterised in that the salt-bearing dusts are intensively mixed with other waste substances such as ashes and flue dusts from heat generating installations which are fired with pit coal or brown coal, waste substances containing silica sands, in particular quartz sands, from foundry works or from building refuse, and waste substances from the production of calcium carbide, with the addition of water, wherein the mixture contains at least 8% of hydrothermally convertible calcium oxide or equivalent amounts of other hydrothermally convertible calcium compounds and the addition of water is such that optimum consolidation is possible and thereafter the mixture is processed to consolidate it to provide strong moulded items, and the moulded items are then hardened in an autoclave at a saturated steam pressure of at least 1 bar.

2. A process according to claim 1 characterised in that in the operation of processing the mixture to provide moulded items the mixture is consolidated by about 50% of the volume of the mixture.

3. A process according to claim 1 or claim 2 characterised in that the mixture is compressed to provide moulded items under a specific pressure of at least 100 bars.

4. A process according to one of claims 1 to 3 characterised in that the operation of consolidating the mixture is effected by means of briquette presses or briquette rollers.

5. A process according to one of claims 1 to 4 characterised in that the operation of consolidating the mixture to provide moulded items is effected by means of vibrators.

6. A process according to claim 1 characterised in that the mixture is processed to provide parallelepipedic moulded items which are between 1 and 10 kg in weight.

7. A process according to claim 6 characterised in that the mixture is processed to provide cubic moulded items.

8. A process according to one of claims 1 to 7 characterised in that the mixture contains at least 20% by weight of calcium oxide and at least 30% by weight of quartz-bearing or silica-bearing substances.

9. A process according to claim 8 characterised in that at least 40% of said quartz-bearing or silica-bearing substances are contained in the form of dust or powder.

10. A process according to one of claims 1 to 9 characterised in that the specific pressing pressure is in the range of between 200 and 400 bars and the saturated steam pressure in the autoclave is over 15 bars.

11. A process according to one of claims 1 to 10 characterised in that silica-bearing natural sands are mixed with the mixture of waste substances.

## Revendications

1. Procédé d'extraction de poussières contenant du sel provenant d'installations d'incinération de déchets, <u>caractérisé</u> en ce que les poussières contenant du sel sont intimement mélangées, sous addition d'eau, à d'autres matières résiduelles telles que des cendres et des poussières en suspension provenant de centrales thermiques alimentées en charbon ou en lignite, des sables silicés, en particulier des matières résiduelles contenant des sables siliceux et provenant de fonderies ou de décombres, des matières résiduelles issues de la production de carbure de calcium, le mélange contenant au moins 8 % d'oxyde de calcium convertible hydrothermalement ou des quantités équivalentes d'autres composés à base de calcium convertibles hydrothermalement, et l'addition d'eau étant dosée de telle sorte qu'il est possible d'obtenir un compactage optimal et de transformer ensuite le mélange par compactage en briquettes solides, puis de durcir les briquettes en autoclave sous une pression de vapeur saturée d'au moins 1 bar.

2. Procédé selon la revendication 1, caractérisé en ce que le mélange, lors de la transformation en briquettes, est compacté d'environ 50 % par rapport au volume du mélange.

3. Procédé selon la revendication 1 ou 2, caractérisé en ce que le mélange est compacté en briquettes sous une pression de compactage spécifique supérieure ou égale à 100 bars.

4. Procédé selon l'une des revendications 1 à 3, caractérisé en ce que le compactage du mélange s'effectue à l'aide de presses ou de rouleaux à briquettes.

5. Procédé selon l'une des revendications 1 à 4, caractérisé en ce que le compactage du mélange en briquettes s'effectue à l'aide de vibrateurs.

6. Procédé selon la revendication 1, caractérisé en ce que le mélange est transformé en briquettes parallélépipèdes lourdes de 1 à 10 kg.

7. Procédé selon la revendication 6, caractérisé en ce que le mélange est transformé en briquettes cubiques.

8. Procédé selon l'une des revendications 1 à 7, caractérisé en ce que le mélange contient au moins 20 % en poids d'oxyde de calcium et au moins 30 % en poids de matières quartzifères ou silicées.

9. Procédé selon la revendication 8, caractérisé en ce qu'au moins 40 % de ces matières quartzifères ou silicées sont présentes sous forme de poussières ou de farine.

10. Procédé selon l'une des revendications 1 à 9, caractérisé en ce que la pression de compactage spécifique est comprise entre 200 et 400 bars et en ce que la pression de vapeur saturée dans l'autoclave est supérieure à 15 bars.

11. Procédé selon l'une des revendications 1 à 10, caractérisé en ce que des sables naturels silicés sont mélangés au mélange de matières résiduelles.